Europäisches Patentamt

European Patent Office

Office européen des brevets

(11) Publication number: 0 347 952
A2

# (12) EUROPEAN PATENT APPLICATION

(21) Application number: 89114957.7

(51) Int. Cl.⁴: H01M 10/40 , H01M 4/40 , H01M 4/02 , H01M 4/60

(22) Date of filing: 08.04.86

(30) Priority: 19.04.85 US 725261
18.07.85 US 756858
05.08.85 US 762357

(43) Date of publication of application:
27.12.89 Bulletin 89/52

(60) Publication number of the earlier application in accordance with Art.76 EPC: 0 199 175

(84) Designated Contracting States:
DE FR GB IT NL

(71) Applicant: ALLIED-SIGNAL INC. (a Delaware corporation)
Columbia Road and Park Avenue P.O. Box 2245R
Morristown New Jersey 07960(US)

(72) Inventor: Schacklette, Lawrence Wayne
11 Alden Place
Maplewood New Jersey 07040(US)
Inventor: Taiguang, Richard Jow
101 Ormonte Road
Chatham Township New Jersey 07928(US)
Inventor: McRae, Maxfield
30 Rockview Avenue
North Plainfield New Jersey 07060(US)
Inventor: Toth, James Edward
45 Essex Avenue
Maplewood New Jersey 07040(US)
Inventor: Gould, Sharon
37 Meadowbrook Road
Maplewood New Jersey 07040(US)

(74) Representative: Brock, Peter William et al
URQUHART-DYKES & LORD 91 Wimpole Street
London W1M 8AH(GB)

(54) Negative electrodes for non-aqueous secondary batteries composed of sodium alloy.

(57) This invention relates to a novel anode for use in batteries, and to batteries containing the anode, which anode comprises an electroactive material selected from the group consisting of sodium alloys.

EP 0 347 952 A2

# NEGATIVE ELECTRODES FOR NON-AQUEOUS SECONDARY BATTERIES COMPOSED OF SODIUM ALLOY

## BACKGROUND OF THE INVENTION

### 1. Field of the Invention

This invention relates to polymeric electrodes. More particularly, this invention relates to negative electrodes for non-aqueous secondary batteries which are composed of a sodium alloy.

### 2. Prior Art

Lithium and lithium alloys have been suggested for use on the negative electode of electromechanical cells. For example, U.S. Patent No. 4,002,492 discloses electrochemical cells having an anode consisting essentially of lithium aluminum alloys that contain lithium in amounts between about 63% and 92% and the balance essentially aluminum. Anodes composed of lithium and aluminum are also disclosed in Rao, et al., J. Electrochem. Soc., 124, 1490 (1977), and Besenhard, J. Electoanal. Chem., 94, 77 (1978).

European Patent No. 0070107 A1; Murphy et al., J. Electrochem. Soc., 126, 349 (1979) and Murphy et al., Mat. Res. Bull., 13 1395 (1978) disclose batteries based on lithium intercalation in layered dichalcogenides.

J.O. Besenhard and G. Eichinger, J. Electroanal. Chem., 78 I (1976), at pages 8 and 9 describe the difficulty of redepositing sodium metal at room temperature from non-aqueous solutions.

## SUMMARY OF THE INVENTION

The present invention obviates one or more of the disadvantages of the prior art alloy anode batteries by providing an improved anode for high energy density electrochemical cells which include a cathode containing a cathode active material, an anode containing an anode active material, and a non-aqueous electrolyte having an ionic salt of the anode active material dissolved therein. More particularly, the improved anode of this invention comprises an anode active material selected from the group consisting of an alloy of sodium and one or more metals or non-metals capable of alloying with sodium. The present invention also provides a battery incorporating the novel anode of this invention, which battery comprises:

(a) a cathode;

(b) an electrolyte comprising an organic solvent and a sodium metal-salt; and

(c) an anode comprising as an anode active material an alloy of sodium and one or more metals or non-metals capable of alloying with sodium in said electrolyte,

said sodium cations in said electrolyte being introduced into said anode as alloy during the charging of said battery and sodium in said alloy dissolving in said electrolyte during the discharging of said battery.

## DESCRIPTION OF THE PREFERRED EMBODIMENTS

As an essential component, the anode for use in the practice of this invention is an alloy of sodium. The type of sodium alloy employed is not critical and can vary widely. Such alloys can be binary, ternary or can contain more than three components. The other component or components can be metallic or non-metallic. Illustrative of alloys which are useful in the conduct of this invention are binary sodium alloys such as sodium alloys of tin, lead, silicon, antimony, bismuth, tellurium, thallium, selenium, gold, cadmium, arsenic, mercury, casium, gallium, and the like. Also illustrative of useful alloys are ternary sodium alloys such as sodium alloys of tine and lead, antimony and lead, selenium and tellurium, and the like. Useful alloys include quaternary alloys such as sodium alloys of lead, tin and bismuth.

Preferred for use in the practice of this embodiment of the invention are sodium alloys in which the other component or components are metals. Particularly preferred for use in the practice of this invention are alloys of sodium and one or more metals selected from the group consisting of tin, lead, antimony, bismuth, selenium, tellerium, mercury and cadmium. Amongst these particularly preferred embodiments, most preferred are ternary or binary alloys of sodium, and tin, lead, bismuth and/or antimony.

The mole ratios of the components of the alloy can vary widely, depending on permissible ratios based on allowed interactions between the components and the desired capacity of the anode. In general, since sodium is the electroactive material in the anode, the greater the mole percent of sodium in the anode, the greater the capacity of the anode; and conversely, the lower the mole ratio of sodium in the anode, the lower the capacity. In general, since higher capacities are desirable, higher amounts of sodium in the alloy are desirable. Sodium as compared to lithium is readily adaptable to providing such high capacity anodes because it can form intermetallic compounds or alloys such as $N_5Pb_2$, $Na_{15}Pb_4$, $Na_5Sn_2$, and $Na_{15}Sn_4$, which have higher sodium content. In the preferred embodiments of the invention, the mole ratio of sodium to other components in the alloy is about equal to or greater than about 0.5 to 1. In these preferred embodiments, the upper amount of sodium in the alloy is the greatest amount of sodium which can be alloyed with the other component or components before pure metallic, un-alloyed sodium is formed. In the particularly preferred embodiments of the invention, the mole ratio of sodium to the other components in the alloy will usually vary from about 1 to about 1, to about 5 to about 1, and in the most preferred embodiments will vary from about 4 to about 1, to about 1 to about 1.

The method of manufacturing the sodium alloy is not critical and can vary widely. Conventional alloying procedures are readily adaptable for use in the practice of this invention. For example, such alloys can be formed electrochemically by plating sodium onto a substrate of the other components as described in more detail in N.N. Tomashova, I.G. Kieseleva and B.N. Kabanov, Elektrokhimiya, Vol. 8, p. 112 (1972) which is incorporated herein by reference. Sodium alloys can also be prepared metallurgically by melting appropriate amounts of sodium and the other components in an inert atmosphere as described in more detail in R. Kremann and P.V. Reininghaus, Z. Metallkunde, Vol. 12, p. 273 (1920) which is hereby incorporated by reference.

The anode of this aspect of the invention may also include other optional materials. For example, in the preferred embodiments of the invention, the anode includes one or more polymeric binders. In these preferred embodiments of the invention, the alloy is generally in particulate form, bonded together, and maintained in a composite structure by the binder. The use of the polymeric binders with the alloy in particulate form, provides for a large surface area for the sodium alloy to contact with the electrolyte media when the anode is placed in the battery electrolyte solution. Polymeric binders which are useful in the practice of this invention are those which form porous substrates to allow for contact between the particulate alloy and the electrolyte,and which hold the alloy in the composite during the charging and discharging of the cell. These functions can be provided by a single binder or a mixture of binders can be used each of which possess one or more of the desirable characteristics. Illustrative of such binders are polyphenylene, and other conjugated backbone polymers such as polythiophene, polyacetylene and the like, and nonconjugated backbone polymers, as for example polyacrylates, polymethacrylates, polyvinyls polyethylene and polypropylene. An especially useful polymer binder is polyphenylene because it swells and also becomes conductive when doped with dosium cations, in combination with polyethylene or polypropylene. However, other materials can be used as binders, provided they are porous to allow for contact between the electrolyte and the alloy and allow the alloy maintains a good electrical continuity within the anode structure, and they maintain the alloy i the composite during the charging and discharging of the cell. When swellable and dopable polymers such as polyphenylene (PPP) are used, alloys having higher sodium content are employed due to the fact that such polymers will absorb sodium from the alloy. high sodium content may not be needed when the swellable polymer does not take sodium from the alloy.

The amount of binder used in the preferred embodiments of the invention is not critical and can vary widely. Usually the amount of binder is not greater than about 40 weight percent based on the total weight percent based on the total weight of alloy and binder, and preferably from about 10 to about 30 weight percent on the aforementioned basis.

The organic solvents which may be included in the electrolyte of the batteries of the present invention may vary widely and can be organic solvents normally used in batteries. Preferably, these solvents should be electrochemically inert to oxidation and reduction during use while simultaneously being capable of disolving the desired alkali metal salt and providing ionic conductivity equal to or in excess of $10^{-4}$ S/cm. Examples of such useful organic solvents include propylene carbonate, ethylene carbonate, sulfolane, methyl sulfolane, dimethyl sulfolane, 3-methyl-2-oxazolidone, alkane sultones, e.g., propane sultone, butane sultone (the use of sultones as electrolyte compositions is the subject of a related, commonly-assigned U.S. patent application Serial No. 556,717, and the use of sultones for coatings on polymer anodes is the subject of a related, commonly-assigned U.S. Pat. No. 4,472,289), dimethyl sulfoxide (DMSO), dimethyl sulfite,

3

tetrahydrofuran (THF), 2-methyltetrahydrofuran (2-MTHF), dioxane, dioxolane, 1,2-dimethoxyethane (DME), dimethoxymethane, diglymes, glymes, anisole, nitriles, (e.g., proprionitrile, butyronitrile, acetonitrile, benzonitrile), dichloromethane, tetraethylsulfamide, aromatic hydrocarbons, e.g., toluene, benzene, organo phosphorus compounds, e.g., hexamethylene phosphoramide, and trimethyl phosphate. Mixtures of such available organic solvents may also be used, such as mixtures of sulfolane and acetonitrile, or mixtures of propylene carbonate and dimethoxyethane.

The organic solvents chosen for use in any particular situation will, of course, depend upon many factors such as the precise electrolyte composition used and the voltage range desired, as well as the choice of cathode and other components of the battery used. A particularly important consideration in choosing a solvent is whether the conjugated backbone polymer employed is subject to attach by the solvent. In the preferred embodiments of the invention when uncoated anodes are employed, ether-type solvents such as tetrahydrofuran, dimethoxyethane, diglyme, 2-methyltetrahydrofuran and mixtures thereof are employed because these solvents are generally not reactive with conjugated backbone polymers, when in their neutral or reduced forms. Essentially, any of the above-listed solvents can be used with anodes coated with solvent-resistant coatings; however, preferred for use with coated anodes are propylene carbonate, ethylene carbonate, sulfolane, 3-methylsulfolane and mixtures of any of the above-listed solvents, which mixtures may also include glymes, particularly dimethoxyethane.

Salts for use in the electrolyte of the battery of this invention are of the formula:

NaA

wherein:

Na is sodium; and

A is a species which is anionic in the electrolyte and stable under operational conditions.

Suitable anionic species include $I^-$, $Br^-$, $Cl^-$, $ClO_4^-$, $PF_6^-$, $AsF_6^-$, $SO_3CF_3^-$, $BF_4^-$, $BCl_4^-$, $AlCl_4^-$, alkylborates, such as $B(CH_3)_4^-$, arylborates, such as $B(C_6H_5)_4^-$, (the use of such borate salts with conjugated polymers being the subject of commonly assigned U.S. patent application Serial No. 556,721, incorporated herein by reference), $POF_4^-$, $CN^-$, $SCN^-$, $OCN^-$, $CF_3CO_2^-$ (trifluoroacetate), $C_6H_5CO_2^-$ (benzoate), $CH_3C_6H_4SO_3^-$ (tosylate), $SiF_6^=$, $HSO_4^-$ and the like. Preferred anions are alkylborates, arylborates, or alkylarylborates, $PF_6^-$, $ClO_4^-$, halide ions, $SO_3CF_3^-$, and $BR_4^-$, and particularly preferred anions are alkylborates arylborates, alkylarylborates and $PF_6^-$.

Molten salts may also be employed as the electrolyte of the battery of the invention. The use of conjugated polymers as anodes in room-temperatures molten salt batteries is described in the commonly-assigned U.S. Pat. No. 4,463,071, which is incorporated herein by reference. Room-temperature molten salts suitable for use in batteries of this invention include alkali metal halide-trialkylimidazolium chloroaluminate, alkali metal halide-dialkylimidazolium chloroaluminate, and alkali metal halide alkyl pyridinium chloroaluminate. Since in many cases the polymers, alloys, and other ion inserting materials of this invention are stable at elevated temperature, intermediate temperature molten salts (M.P. <200°C) such as $NaAlCl_4$ or $KAlCl_4$, are also suitable for use.

Cathodes for use in the practice of this invention are not critical and can be varied widely. Suitable cathode include a material selected from the group consisting of graphite, intercalation compounds of graphite, high surface area carbons (>200 m2/g), transition-metal chalcogenides, and conjugated backbone polymers which are capable of being oxidized (acceptor-doped). Transition-metal chalcogenides and conjugated backbone polymers are preferred cathode materials.

The transition-metal chalocogenides, suitable as cathode materials useful in this invention, can contain inserted alkali metals and include the transition-metal dichalcogenides such as $TiS_2$ and, among others, those listed on page 392 of "Lithium Batteries" edited by J.P. Gabano (Academic Press, 1983) and in K.M. Abraham, Solid State Ionics, Vol. 7, pp. 199-212 (1982) (both incorporated herein by reference). These include (with approximate open circuit potentials measured in various organic electrolytes when fully charged or devoid of inserted cations):

4

| | |
|---|---|
| $Na_xTiS_2$ | 2.1V versus $Na/Na^+$ |
| $Na_xNbS_2Cl_2$ | 2.2V versus $Na/Na^+$ |
| $Li_xMoS_2$ | 2.3V versus $Li/Li^+$ |
| $Li_xFe_{0.25}V_{0.075}S_2$ | 2.4V versus $Li/Li^+$ |
| $Li_xTiS_2$ | 2.5V versus $Li/Li^+$ |
| $LixMoS_3$ (amorphous) | 2.5V versus $Li/Li^+$ |
| $Na_xCr_{0.5}S_2$ | |
| $Na_xWO_{3-y}$ | 2.6V versus $Na/Na^+$ |
| $Na_xMoS_3$ (amorphous) | 2.7V versus $Na/Na^+$ |
| $Na_xTaS_2$ | 2.7V versus $Na/Na^+$ |
| $K_xWO_{3-y}$ | |
| $Li_xMoO_3$ | 2.8V versus $Li/Li^+$ |
| $Li_xV_6O_{13}$ | 2.9 versus $Li/Li^+$ |
| $Li_xCr_{0.5}V_{0.5}S_2$ | 2.9V versus $Li/Li^+$ |
| $Li_xW_{0.2}V_{2.8}O_7$ | 3.0V versus $Li/Li^+$ |
| $Li_xCr_3O_8$ | 3.6V versus $Li/Li^+$ |
| $Na_xCoO_2$ | 3.7V versus $Na/Na^+$ |
| $Li_xCoO_2$ | 4.7V versus $Li/Li^+$ |

Suitable polymer cathodes include oxidized polyacetylene, poly(p-phenylene), polyacenes, poly-(phenylene vinylene), polyazulene, polynaphthalene, poly(phenylene sulfide), poly(phenylene oxide), polyphenothiazine, polyaniline, polypyrrole, polythiophene, polythianthrene and substituted versions of the above. Such polymers may be coated by reaction when oxidized, with pyrroles, thiophenes, azulenes, oxiranes, anilines or furans, as described in commonly-assigned U.S. Pat. No. 4,472,987, the disclosure of which is incorporated herein by reference.

The secondary battery of this invention can be charged and discharged in accordance with the procedure described in U.S. Pate. No. 4,321,114. Such procedures are well known to those of skill in the art and will not be described herein in any great detail.

The following specific examples are presented to more particularly illustrate the invention and are not to be construed as limitation therein.


EXAMPLE I


To prepare Na-Pb alloy metallurgically, proper amounts of Na and Pb were placed in a stainless steel container and heated at a temperature about 510 ± 10 C in inert atmosphere or under vacuum for a few hours and then quenched to room temperatures. The alloy was then pulverized before use. Na-Pb alloy of the following composition $NaPb_3$, $Na_5Pb_2$ and $Na_{15}Pb_4$ were prepared using the method described as above. Their electrochemical potentials relative to Na were measured using electrometer in the appropriate electrolyte solutions containing sodium ions and listed in Table 1 as follows:

TABLE 1

| Composition | Potential (vs $Na/Na^+$), V |
|---|---|
| $NaPb_3$ | 0.51 |
| $NaPb$ | 0.37 |
| $Na_5Pb_2$ | 0.183 |
| $Na_{15}Pb_4$ | 0.12 |


EXAMPLE II

Metallurgically formed Na-Pb alloy powder of the composition $Na_{15}Pb_4$ (32 mg) was pressed onto the expanded nickel metal and used as an electrode. The potential of this electrode was measured while stripping 83% of the Na in the $Na_{15}Pb_4$ alloy away from the electode. The potential vs the amount of sodium stripped from the elctrode was plotted. Several potential plateaus were observed from the plot. This indicated that $Na_{15}Pb_4$ and other binary alloys formed during the stripping procedure corresponded well with the potentials measured in Example I and with their respective compositions. Less than 10 % Na stripping from the alloy was due to the loss alloy resulted from the volume change.

## EXAMPLE III

Sodium alloy can also be formed electrochemically by plating Na onto Pb foil. By plating Na on Pb foil at a current density of 50 micramp/$cm^2$, Na-Pb alloy of various compositions were shown as several potential plateaus. The potential of these plateaus: 0.5, 0.34, 0.17 and 0.12V corresponded well with the values measured in Example I.

## EXAMPLE IV

Na ternary alloy containing Pb and Sn was prepared by heating the proper amounts of Na, Pb and Sn in a stainless steel crucible in an inert atmosphere or under vacuum at a temperature about $510 \pm 10°$ C for a few hours and then quenching to room temperatures. The resulting ternary alloy had the following composition $NaPb_{0.26}Sn_{0.74}$ and a potential of 0.25 vs $Na/Na^+$.

## EXAMPLE V

A Na alloy electrode was prepared by mixing the $NaPb_{0.26}Sn_{0.74}$ alloy of Example IV in powdered form with 10 weight percent of polyphenylene (PPP) and 10 weight percent of polypropylene binder. The mixture was then pressed onto expanded nickel metal and heated at 160 C for 10 to 20 minutes under vacuum or in an inert atmosphere.

A cell was constructed which consisted of the anode (68 gm on an area of 0.6 x 2.4 $cm^2$) whose preparation is described above and a $Na_xCoO_2$ cathode was assembled using glass filter paper to separate the two electrodes. The electrolyte solution used was 1.25 M $NaPF_6$ in DMA. Before cycling, 3.77 mAh capacity was added to the anode. This amount of charge was obtained by charging the $Na_xCoO_2$ cathode and plating sodium from the auxilliary sodium electrode. The final potential of this electrode was about 0.10V.

The cell was then cycled at a rate of 0.5 mA/$cm^2$ in the voltage range of 3.2 to 2.2V ($Na_xCoO_2$ vs alloy anode) for 22 cycles. The cell was further cycled at a rate of 1.0 mA,/$cm^2$ in the same voltage ranges from the 23rd to the 87th cycle. The potential profile of the anode (vs $Na/Na^+$) vs capacity at selected cycles was plotted. The plot indicated that the discharge capacity of the cell decreased from 4.39 mAh at the first cycle to 3.59 mAh at the 21st cycle, 3.35 mAh at the 24th cycle, 3.07 mAh at the 50th cycle and 2.84 mAh at the 87th cycle. The coulombic efficiency of each cycle was varied from 97 to 99%.

## Claims

1. A battery comprising:
(a) an electrolyte comprising an organic solvent and sodium salt;
b) a cathode; and
(c) an anode comprising an anode active material selected from the group consisting of alloys of sodium and one or more metals or non-metals which alloy with sodium;
said sodium cations from said electrolyte alloying with said metals or non-metals in said anode as an alloy during the charging of said battery and said sodium in said alloy dissolving in said electrolyte during the discharging of said battery.

2. A battery according to claim 1 wherein said metals or non-metals are selected from the group consisting of tin, lead, silicon, antimony, bismuth, tellurium, thallium, selenium, gold, cadmium, arsenic, mecury, cesium and gallium.

3. A battery according to claim 2 wherein said alloys and selected from the group consisting of ternary or binary alloys of sodium and one or two metals selected from the group consisting of tin, lead, bismuth, and antimony.

4. A battery according to claim 3 wherein said alloy is a binary alloy of sodium and lead, or sodium and tin, or a ternary alloy of sodium, tin and lead.

5. A battery according to claim 1 wherein said anode comprises a composite comprising said alloy in particulate form dispersed in one or more polymeric binders at least one of said binders is swellable by said battery electrolyte and allows electrical continuity between all or a part of the dispersed alloy.

6. A battery according to claim 5 wherein said binders are polyphenylene in combination with polyethylene or polypropylene.

7. A battery according to claim 1 wherein the mole ratio of sodium to the other components is at least about 1 to 1.

8. A battery according to claim 7 wherein said mole ratio is from about 1 to 1, to about 5 to 1.

9. A battery according to claim 8 wherein said mole ratio is from about 1 to 1, to about 4.5 to 1.

10. A secondary battery according to claim 1 comprising:

(a) an anode which comprises an alloy of sodium and one or more other metallic or non-metallic materials in particulate form dispersed in one or more polymeric binders at least one of said binders being swellable by a battery electrolyte allowing electrical continuity between all or a part of the dispersed alloy;

(b) an electolyte comprising one or more organic solvents and one or more sodium salts dissolved therein forming dissolved sodium cations in solution; and

(c) a cathode; said sodium cations from said electrolyte alloying with said materials of said alloy in said anode during the charging of said battery and sodium in said alloy dissolving in said electrolyte during the discharging of said battery.